# EUROPEAN PATENT APPLICATION

(11) **EP 2 177 099 A1**
(43) Date of publication of application: **21.04.2010**
(21) Application number: 09172825.3
(22) Date of filing: 13.10.2009
(51) Int. Cl.: A01C 1/04, A01C 1/06

(54) **Package with seeds**

(30) Priority: 15.10.2008 EP 08166627
(71) Applicant: Swilion Business Development BV, 2140 AA Vijfhuizen (NL)
(72) Inventor: Oosterling, Pieter, 4508KC, WATERLANDKERKJE (NL)
(74) Representative: Uittenbogaart, Gustaaf Adolf

(57) **Abstract**

The invention concerns a package with seeds of a plant variety, the seeds being ready to start germinating after being wetted and having a coating to accelerate or delay germinating. In accordance with the invention, the package contains seeds with different coatings causing different accelerations and/or delays in the start of germination.

## Description

The invention concerns a package with seeds in accordance with the preamble of claim 1. Coated seeds, transported and sold in a package, are used for instance when seeding a field before the start of winter wherein the plants should germinate after a few months for instance in spring. In another use, the coating has substances that accelerate the germination of the plants so that the plants start growing sooner and will have a longer growing season. Using these seeds means that after seeding all seeds from the package will be germinating more or less simultaneously so that the crop in the fields is ready simultaneously as well. For non-professional use this is a disadvantage as the consumer will have to process or eat the complete crop from seeds in the package in a very short period. In order to overcome this disadvantage the package is according to claim 1. By accelerating or delaying the germination of the seeds for a different period for the different seeds in the package, after at a specific moment seeding and cultivating all seeds the plants will be ready for consumption gradually, for instance a few plants each week. This enables a consumer to seed all seeds simultaneously and to enjoy the harvest of the plants gradually.

In accordance with an embodiment, the package is according to claim 2. In this way, during seeding the seeds can be located in the nursery trays in accordance with the delays for germination.

In accordance with an embodiment, the package is according to claim 3. In this way, the seeds are ready for start of growth after the seedbed is wetted.

In accordance with an embodiment, the package is according to claim 4. In this way, the plants can grow to their full dimensions.

In accordance with an embodiment, the package is according to claim 5. In this way, the seeds are located at the proper distances and the germination will follow at a most advantageous sequence.

In accordance with an embodiment, the package is according to claim 6. In this way, only natural fibres remain to be disposed of after the growth.

In accordance with an embodiment, the package is according to claim 7. In this way, the nutritive or protective substances are in the immediate vicinity of the seeds and after germination in the immediate vicinity of the plants and their roots, where they are most effective.

In accordance with an embodiment, the package is according to claim 8. In this way, the consumer gets over a longer period a variety of products that fulfil the same needs.

Hereafter the invention is explained with the aid of several examples.

### Example 1:

A mat made of fibres such as cocoanut fibres with a length of 1,2 meter and a width of 0,8 meter has three or four rows of lettuce seeds wherein the distance between the rows is the same as the distances between the seeds. The seeds have a special coat that delays germination of the seeds. The seeds near one of the short sides of the mat have only a short delay in germinating after the seeds are wetted. The seeds further away from that short side have an increasingly longer delay in germinating after they are wetted. In this way after for instance 12 weeks, the user can harvest three or four lettuce plants, one from each row. After a few days or a week, the user can harvest the next plants in a row and this harvesting continues until all plants in a row are harvested.

The seeds are fastened between the fibres in the mat for instance with glue. In a further embodiment, the mat has near the seeds nutritional or protective substances that after wetting the mat slowly release nutrients or protective substances in the area near the seeds so that the growth is stimulated or that crop diseases caused by very small germs or similar organisms are prevented. In some embodiments, the nutritional or protective substances can be part of the seed coating.

Prior to use the mat with the seeds and if applicable the nutritional substance is rolled to a cylindrical package that is packed in a cardboard wrapper. If necessary, the wrapper is of material that prevents wetting of the mat and particularly of the seeds in the mat.

In a further embodiment of this example, the seeds in a row are alternating of two types of lettuce, such as iceberg lettuce and butterhead lettuce. In this way the user varies his lettuce menu.

In a further embodiment of this example, the seeds in the mat are of different herbs such as chives, sage, dill, or coriander. The coating of the seeds are made such that the germination of the various herbs are delayed such that at least one plant of a first kind of herb, such as chives, is simultaneously ready for harvesting as at least one plant of the further types of herbs, such as sage, dill, or coriander. Also the second and later plants of the first kind of herb and the second and later plants of the further types of herbs are harvested simultaneously.

In the foregoing embodiments, the described mat is of cocoa fibres. It will be clear that there are other fibres suitable for cultivation of plants and they can be used in a similar way.

### Example 2:

A package contains seeds for radish plants, broad beans, bean sprouts, or another vegetable. The seeds have a coat that prevents germination for a short period of time delay. In the package, the seeds have different colours for the different periods of time delay and the package contains seeds with three or more time delay periods. In other embodiments, the seeds with the same time delay can have instead of a different colour they can have different markings, like one or more coloured rings, or they are packaged in separate paper bags.

In one preferred use of the package the user will seed the seeds with the same time delay, that have for instance the same colour or the same markings, near each other. These seeds will germinate more or less simultaneously and the seeds with a different colour or marking will germinate at a different moment, for instance later. In this way after seeding the seeds more or less simultaneously, the period that the crop is ready to harvest extends over a long period.

In another use, the seeds with the different time delays are seeded randomly. The crop will then be harvested randomly over the seeded area and after harvesting one plant the plants around it, that had a longer delay in start of the growth, will get space and light and start growing strong. This method uses the available space more efficiently.

In a further embodiment, the coating of the seeds can include substances that accelerate the germination of the seeds for different durations. This increases for the different coated seeds the period in which the germination of the seeds starts.

## Claims

1. Package with seeds of a plant variety, the seeds being ready to start germinating after being wetted and having a coating to accelerate or delay germinating **characterized in that** the package contains seeds with different coatings causing different accelerations and/or delays in the start of germination.

2. Package in accordance with claim 1 wherein the seeds
with different coatings and/or germination delays have different markings.

3. Package in accordance with claim 1 wherein the package contains a seedbed in which the seeds are embedded.

4. Package in accordance with claim 1, 2 or 3 wherein the package contains a seedbed in which the seeds are embedded and wherein the distances between the embedded seeds depend on dimensions of full-grown plants.

5. Package in accordance with claim 1, 2 or 3 wherein the package contains a seed-bed in which the seeds are embedded in a growth-sequence related position.

6. Package in accordance with one of the claims 3, 4 or 5
wherein the seed-bed comprises only natural fibres such as cocoanut fibre.

7. Package in accordance with one of the claims 3 - 6
wherein the seedbed and/or the coating contains nutritive or protective substances, the nutritive or protective substances preferably being slow releasing.

8. Package in accordance with one of the previous claims
wherein the package contains at least two plant varieties that have similar properties and/or fulfil similar consumer demands.
